(19) Europäisches Patentamt
European Patent Office
Office européen des brevets

(11) **EP 3 570 969 B2**

(12) **NEW EUROPEAN PATENT SPECIFICATION**
After opposition procedure

(45) Date of publication and mention
of the opposition decision:
**15.05.2024   Bulletin 2024/20**

(45) Mention of the grant of the patent:
**10.03.2021   Bulletin 2021/10**

(21) Application number: **17818531.0**

(22) Date of filing: **15.12.2017**

(51) International Patent Classification (IPC):
**B01J 8/18** (2006.01)        **B01J 8/24** (2006.01)
**C08F 2/00** (2006.01)        **C08F 2/01** (2006.01)
**C08F 10/00** (2006.01)

(52) Cooperative Patent Classification (CPC):
(C-Sets available)
**C08F 2/00; B01J 8/18; B01J 8/1818; B01J 8/24;
C08F 2/01; C08F 2/44; C08F 10/00;**
B01J 2208/00938; B01J 2208/00991        (Cont.)

(86) International application number:
**PCT/EP2017/082977**

(87) International publication number:
**WO 2018/134007 (26.07.2018 Gazette 2018/30)**

(54) **METHOD FOR FEEDING A FLUID TO A GAS PHASE POLYMERIZATION REACTOR**

VERFAHREN ZUM ZUFÜHREN EINER FLÜSSIGKEIT IN EINEN
GASPHASEN-POLYMERISATIONSREAKTOR

PROCÉDÉ D'ALIMENTATION D'UN FLUIDE DANS UN RÉACTEUR DE POLYMÉRISATION EN
PHASE GAZEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **20.01.2017   EP 17152464**

(43) Date of publication of application:
**27.11.2019   Bulletin 2019/48**

(73) Proprietor: **Basell Poliolefine Italia S.r.l.
20121 Milano (IT)**

(72) Inventors:
• **BALESTRA, Enrico
44122 Ferrara (IT)**
• **CAPUTO, Tiziana
44122 Ferrara (IT)**
• **COVEZZI, Massimo
44122 Ferrara (IT)**
• **DORINI, Maurizio
44122 Ferrara (IT)**
• **MAZZUCCO, Antonio
44122 Ferrara (IT)**
• **MEI, Gabriele
Channelview, Texas TX 77530 (US)**
• **RINALDI, Riccardo
44122 Ferrara (IT)**

(74) Representative: **LyondellBasell
c/o Basell Poliolefine Italia
Intellectual Property
P.le Donegani 12
44122 Ferrara (IT)**

(56) References cited:
EP-A1- 1 083 192        EP-A2- 0 856 530
WO-A1-2016/150997        US-A- 5 693 727
US-A- 5 962 606        US-A- 6 075 101
US-A- 6 111 034        US-B2- 6 689 847

EP 3 570 969 B2

(52) Cooperative Patent Classification (CPC): (Cont.)

C-Sets
**C08F 10/00, C08F 2/01;**
**C08F 210/16, C08F 2/00;**
**C08F 210/16, C08F 2/005;**
**C08F 210/16, C08F 2/01;**
**C08F 210/16, C08F 2/34**

C-Sets
**C08F 10/00, C08F 2/01;**

**Description**

FIELD OF THE INVENTION

The present disclosure pertains to the field of gas phase processes for the polymerization of olefins. More particularly, it relates to a method for feeding a fluid antistatic composition into a fluidized bed gas phase polymerization reactor. It also relates to a process for the polymerization of olefins carried out in the presence of an antistatic compound fed to the polymerization reactor with the method of the invention.

BACKGROUND OF THE INVENTION

Whenever a controlled flow rate of a fluid needs to be fed into the polymer bed of a fluidized bed gas phase polymerization reactor, it is desirable that such fluid contacts the polymer particles as uniformly as possible.

Examples of fluids to be fed into a fluidized bed gas phase polymerization reactor are those with antifouling and/or antistatic effect.

The stability of fluidized-bed gas-phase polymerization reactors can be negatively affected by a variety of factors. Among others, the presence of electrostatic charges, hot spots, and low polymer flowability. All those factors may jeopardize the operation of the reactor itself with fouling, sheeting and ultimately blockage of the discharge valve(s), resulting in a shut down. This is true of all types of gas phase polymerization reactors, both in fluidized, fast-fluidized and non-fluidized form (i.e. moving packed beds).

Antistatic agents are used in processes for the polymerization of olefins to avoid electrostatic charging in order to reduce wall sheeting and formation of polymer agglomerates in the polymerization reactor or in downstream equipment such as degassing and recovery vessels. In the context of olefin polymerization, antistatic agents are also called antifouling agents, polymerization process aids, activity inhibitors, productivity inhibitors or kinetic modifiers. The antistatic agents comprise antistatically-acting compounds which have polar functional groups such as acid or ester groups, amine or amide groups or hydroxyl or ether groups. Examples of antistatically-acting compounds are polysulfone copolymers, polymeric polyamines, polyalcohols, hydroxyesters of polyalcohols, salts of alkylaryl-sulfonic acids, polysiloxanes, alkoxyamines, polyglycol ethers, etc.

Another case where a good distribution in a gas phase reactor is required is whenever a liquid co-catalyst has to be fed and a good dispersion will guarantee the required product homogeneity.

EP 1 083 192 A1 discloses a process for a gas phase polymerization of a polymer using at least one liquid olefinic monomer in the presence of a catalyst, wherein the at least one liquid olefinic monomer is directly added to a fluidized reactor at one or more points located between 5% and 90% of the fluidized bed height above a distributor plate positioned at or near the bottom of the reactor by means of at least one nozzle or tube positioned to protrude into the fluidized bed at least 2 inches and at least 20% of the radius of the reactor.

EP 856 530 A2 discloses a polymerization catalyst comprising supported neodymium a co-catalyst selected from alkyl-aluminum compounds. The catalyst is preferably fed into the reactor at a point 20 to 40 percent of the reactor diameter away from the reactor wall and at a height of about 5 to about 30 percent of the height of the bed.

US-A-6 111 034 discloses the addition of water to a gas phase olefin polymerization reactor in amounts greater than 3 ppmv thereby increasing the level of condensable gas, facilitating operation of the reactor at an elevated dew point by ameliorating electrostatic phenomena in the reactor and inhibiting sheeting. The tip of the catalyst injection tube extends 3.75 inches from the reactor wall into the fluid bed at about the 1 foot level above the distributor plate.

It is thus desirable to provide a method for feeding a fluid into the polymer bed of a fluidized bed gas phase polymerization reactor in a manner that such fluid contacts the polymer particles as uniformly as possible.

SUMMARY OF THE INVENTION

The present disclosure provides a method for feeding a fluid antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm$^2$/sec (DIN 51562)

into a polymer bed of a fluidized bed gas phase polymerization reactor by introducing a controlled and continuous flow rate of the fluid antistatic composition into the polymer bed through a distributor protruding into the fluidized bed zone of the reactor and terminating with a discharge end positioned so that the following equation is fulfilled:

$$d/D > 0.020$$

wherein

- d is the distance of the distributor's discharge end from the wall of the reactor,

- D is the diameter of the reactor in the fluidized bed zone, and

- wherein a head loss is generated through appropriate orifices in the distributor such that a Reynolds number (Re) of from 10000 to 700000.

The present disclosure further provides a process for the preparation of polyolefins in the presence of an antistatic compound said process comprising the step of feeding a fluid antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm$^2$/sec (DIN 51562)

into a polymer bed of a fluidized bed gas pnase polymerization reactor by introducing a controlled and continuous flow rate of the fluid antistatic composition into the polymer bed through a distributor protruding into the fluidized bed zone of the reactor and terminating with a discharge end positioned so that the following equation is fulfilled:

$$d/D > 0.020$$

wherein

- d is the distance of the distributor's discharge end from the wall of the reactor,
- D is the diameter of the reactor in the fluidized bed zone, and
- wherein a head loss is generated through appropriate orifices in the distributor such that a Reynolds number (Re) of from 10000 to 700000.

BRIEF DESCRIPTION OF THE DRAWINGS

Figure 1 depicts schematically an illustrative set-up of a fluidized bed gas phase polymerization reactor for carrying out the process for the preparation of polyolefins of the present disclosure, without however restricting the invention to the embodiments illustrated therein.
Figure 2 shows the inner reactor surface after the polymerization run of Example 1.
Figure 3 shows the inner reactor surface after the polymerization run of Comparative Example 2.

DETAILED DESCRIPTION OF THE INVENTION

Fluidized-bed polymerization reactors are reactors in which the polymerization takes place in a bed of polymer particles which is maintained in a fluidized state by feeding in gas at the lower end of a reactor, for example below a gas distribution grid having the function of dispensing the gas flow, and taking off the gas again at its upper end. The reactor gas is then returned to the lower end to the reactor via a recycle line equipped with a compressor and a heat exchanger. The circulated reactor gas is, for example, a mixture of the olefins to be polymerized, inert gases such as nitrogen and/or lower alkanes such as ethane, propane, butane, pentane or hexane and optionally a molecular weight regulator such as hydrogen. According to an embodiment, nitrogen or propane can be used as inert gas, if appropriate in combination with further lower alkanes. The velocity of the reactor gas has to be sufficiently high firstly to fluidize the mixed bed of finely divided polymer present in the tube serving as polymerization zone and secondly to remove the heat of polymerization effectively. The polymerization can also be carried out in a condensed or super-condensed mode, in which part of the circulating reaction gas is cooled to below the dew point and returned to the reactor separately as a liquid and a gas-phase or together as a two-phase mixture in order to make additional use of the enthalpy of vaporization for cooling the reaction gas.

The present invention requires that d/D > 0.020; wherein d is the distance of the distributor's discharge end from the wall of the reactor, and D is the diameter of the reactor in the fluidized bed zone.

In some embodiments, a head loss is generated through appropriate orifices in the distributor such that a Reynolds number (Re) of from 20000 to 500000, or from 30000 to 300000 is achieved.

The fluid is an antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and

(b) from 50 to 99.5 % by weight of an oligomeric or polymeric organic compound having one or more terminal hydroxyl groups and a viscosity at 40°C of at least 20 mm$^2$/sec (DIN 51562).

In one embodiment, the compound (a) of formula R-OH is water. According to other embodiments, the compound (a) of formula R-OH is an alcohol selected from methanol, ethanol, 1-propanol, 1-butanol, 1-pentanol, 1-hexanol, 1-heptanol, 1-octanol, 1-nonanol, 1-decanol, undecan-1-ol, dodecan-1-ol, tridecan-1-ol, 1-tetradecanol, pentadecan-1-ol, isobutanol, isoamyl alcohol, 2-methyl-1-propanol, phenethyl alcohol, tryptophol, isopropanol, 2-butanol, 2-pentanol, 2-hexanol, 2-heptanol, cyclohexanol, tert-butyl alcohol, tert-amyl alcohol, 2-methyl-2-pentanol, 2-methylhexan-2-ol, 2-methylheptan-2-ol, 3-methyl-3-pentanol and 3-methyloctan-3-ol.

In some embodiments, the oligomeric or polymeric organic compound (b) has a viscosity at 40°C (DIN 51562) of 30-2000 mm$^2$/sec, or of 50-1500 mm$^2$/sec, or of 100-1000 mm$^2$/sec, or of 150-500 mm$^2$/sec, or of 200-400 mm$^2$/sec, or of 250-300 mm$^2$/sec, or of 260-285 mm$^2$/sec. The preferred viscosity at 40°C (DIN 51562) of the oligomeric or polymeric organic compound (b) is in the range of 260 to 285 mm$^2$/sec.

In some embodiments, the oligomeric or polymeric organic compound (b) is selected from alcohols, polyethers, polyalcohols, hydroxyesters of polyalcohols, polyglycol ethers, polyglycol esters and derivatives thereof.

In some embodiments, the oligomeric or polymeric organic compound (b) is a polyether and, more specifically, an alkylene-oxide-derived polymer comprising on average from 10 to 200 repeating units -(CH$_2$-CHR-O)-, with R being hydrogen or an alkyl group having from 1 to 6 carbon atoms.

In some embodiments, all of terminal groups of the alkylene-oxide-derived polymer are -OH groups.

In some embodiments, the alkylene-oxide-derived polymer is a random copolymer of ethylene oxide and of other alkylene oxides, and the repeating units -(CH$_2$-CH$_2$-O)$_n$- derived from ethylene oxide to repeating units -(CH$_2$-CHR'-O)$_m$- derived from the other alkylene oxides, with R' being an alkyl group having from 1 to 6 carbon atoms, are present in a ratio n : m in the range of from 6 : 1 to 1 : 1, or in the range of from 5 : 1 to 1.5 : 1, or further in the range of from 4 : 1 to 2 : 1.

In some embodiments, the alkylene-oxide-derived polymer is a linear polymer of general formula (I)

$$HO-(CH_2-CH_2-O)_n-(CH_2-CHR'-O)_m-H \qquad (I)$$

wherein R' is an alkyl group having from 1 to 6 carbon atoms, or an alkyl group having from 1 to 3 carbon atoms, or a methyl group; n is in the range of from 10 to 180, or from 20 to 100, or from 30 to 50; m is in the range of from 2 to 120, or from 10 to 80, or from 10 to 40; n and m denoting the average number of repeating units.

In some embodiments, alkylene-oxide-derived polymer is a random copolymer of ethylene oxide and propylene oxide.

In some embodiments, the ethylene oxide/propylene oxide copolymer is a linear ethylene oxide/propylene oxide copolymer of general formula (II)

$$HO-(CH_2-CH_2-O)_n-(CH_2-CH(CH_3)-O)_m-H \qquad (II)$$

wherein n is in the range of from 10 to 180, or from 20 to 100, or from 30 to 50 and m is in the range of from 2 to 120, or from 10 to 80, or from 10 to 40.

Alkylene-oxide-derived polymers for use in the process of the present disclosure can be prepared by reacting ethylene oxide and the other alkylene oxides, such as propylene oxide, with polyhydric alcohols like diols, e.g. ethylene glycol, triols, e.g. glycerol, or polyols such as e.g. pentaerythritol. The reaction with diols results in linear polymers.

In some embodiments, the oligomeric or polymeric organic compound (b) is water-soluble. In the contest of the present description, "water-soluble" means soluble in water at room temperature, i.e. at about 23°C.

According to embodiments of the disclosure, the amount of antistatic composition introduced into the polymerization reactor is from 1 to 5000 ppm per weight, or from 10 to 3000 ppm per weight, or from 50 to 1000 ppm per weight referring to the weight of the prepared polyolefin.

According to embodiments of the disclosure, the amount of component (a) introduced into the polymerization reactor is from 1 to 70 ppm per weight, or from 1 to 50 ppm per weight, or from 2 to 40 ppm per weight, or from 2 to 30 ppm per weight, or from 3 to 30 ppm per weight, or from 3 to 20 ppm per weight referring to the weight of the prepared polyolefin.

According to embodiments of the disclosure, the amount of component (a) in the antistatic composition introduced into the polymerization reactor is from 0.5 to 50 % by weight, or from 3 to 30 % by weight, or from 5 to 15 % by weight with respect to the total weight of antistatic composition.

According to embodiments of the disclosure, the amount of component (b) in the antistatic composition introduced into the polymerization reactor is from 50 to 99.5 % by weight, or from 70 to 97 % by weight, or from 85 to 95 % by weight with respect to the total weight of antistatic composition.

In a method of operation, the antistatic composition can be fed to the polymerization reactor in a flow of saturated or unsaturated hydrocarbon having from 2 to 6 carbon atoms that, according to an embodiment, can be a monomer, such as propylene, and, according to another embodiment, an alkane, such as propane. The monomer and the alkane can be either in liquid or gas form.

According to an embodiment, the antistatic composition and the hydrocarbon are homogenized at short distance from the distributor by means of customary mixing/homogenizing/dispersing systems, such as static mixers or atomizers/nebulizers, so to create an emulsion or fog of small droplets of the antistatic dispersed phase into the hydrocarbon continuous phase.

According to another embodiment, the antistatic composition and the hydrocarbon are homogenized inside the distributor, whereby the distributor itself acts as a mixing/homogenizing/dispersing system, such as static mixer or atomizer/nebulizer, so to create an emulsion or fog of small droplets of the antistatic dispersed phase into the hydrocarbon continuous phase.

The present disclosure provides a process for the polymerization of olefins, such as 1-olefins, i.e. hydrocarbons having terminal double bonds, without being restricted thereto. Typical 1-olefins are linear or branched 1-alkenes having from 2 to 12 carbon atoms, in particular linear 1-alkenes having from 2 to 10 carbon atoms such as ethylene, propylene, 1-butene, 1-pentene, 1-hexene, 1-heptene, 1-octene, 1-decene or branched 1-alkenes having from 2 to 10 carbon atoms such as 4-methyl-1-pentene, conjugated and non-conjugated dienes such as 1,3-butadiene, 1,4-hexadiene or 1,7-octadiene or vinyl-aromatic compounds such as styrene or substituted styrene. It is also possible to polymerize mixtures of various 1-olefins. Olefins that can be polymerized with the process of the present disclosure include those in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

According to an embodiment, the process can be used for the homopolymerization or copolymerization of ethylene or for the homopolymerization or copolymerization of propylene. According to an embodiment, comonomers for use in ethylene polymerization are 1-alkenes having from 3 to 8 carbon atoms such as 1-butene, 1-pentene, 1-hexene and/or 1-octene in amount of up to 20 wt.% or from 0.01 wt.% to 15 wt.%, or from 0.05 wt.% to 12 wt.%. According to another embodiment, comonomers for use in propylene polymerization are ethylene and/or 1 butene and/or 1-hexene in amount of up to 40 wt.% or from 0.5 wt.% to 35 wt.%.

The process of the present disclosure allows the preparation of any types of common olefin polymers. According to an embodiment, the prepared olefin polymers can be broad molecular weight olefin polymers and, particularly, multimodal olefin polymers whereby the term multimodal refers to the modality of the molecular weight distribution. As used in the art, and also used herein, multimodal shall include bimodal. Such polymers can be obtained from polymerizing olefins in a cascade of two or more polymerization reactors or in different zones of a multizone reactor under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. In addition to the molecular weight distribution, the olefin polymer can also have a comonomer distribution. In an embodiment the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal olefin polymers.

The polymerization of olefins can be carried out using customary olefin polymerization catalysts. That means the polymerization can be carried out using titanium-based Ziegler-Natta-catalysts, Phillips catalysts based on chromium oxide, or single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts may be designated as hybrid catalysts.

According to an embodiment, catalysts for the process of the present disclosure are Ziegler-Natta catalysts comprising:

(i) a solid catalyst component comprising Mg, Ti, an halogen and a first electron donor compound (internal donor),

(ii) an alkylaluminum compound, and

(iii) optionally, a second electron-donor compound (external donor).

Component (i) can be prepared by contacting a magnesium halide, a titanium compound having at least a Ti-halogen bond, and optionally an electron donor compound. The magnesium halide can be $MgCl_2$ in active form which is widely known from the patent literature as a support for Ziegler-Natta catalysts. The titanium compounds can be $TiCl_4$ or $TiCl_3$. Ti-haloalcoholates of formula $Ti(OR)_{n-y}X_y$, where n is the valence of titanium, y is a number between 1 and n-1 X is halogen and R is a hydrocarbon radical having from 1 to 10 carbon atoms, can also be used.

Electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Other solid catalyst components which may be used are those based on a chromium oxide supported on a refractory oxide, such as silica, and activated by a heat treatment. Catalysts obtainable from those components consist of chromium (VI) trioxide chemically fixed on silica gel. These catalysts are produced under oxidizing conditions by heating the silica gels that have been doped with chromium(III)salts (precursor or precatalyst). During this heat treatment, the chromium(III) oxidizes to chromium(VI), the chromium(VI) is fixed and the silica gel hydroxyl group is eliminated as water.

Still other solid catalyst components which may be used are single-site catalysts supported on a carrier, such as metallocene catalysts comprising:

- at least a transition metal compound containing at least one n bond; and

- at least a cocatalyst selected from an alumoxane or a compound able to form an alkylmetallocene cation.

According to embodiments of the disclosure, when the catalyst includes an alkylaluminum compound, such as in Ziegler Natta catalysts, the molar ratio of component (a) to alkylaluminum compound introduced into the polymerization reactor is from 0.05 to 3, or from 0.1 to 2, or from 0.5 to 1.

The catalysts may be optionally subjected to prepolymerization before being fed to the polymerization reactor. In an embodiment the prepolymerization occurs in a loop reactor. The prepolymerization of the catalyst system may be carried out at a low temperature, for instance in a range of from 0°C to 60°C.

The process of the present disclosure can be carried in two or more cascade reactors, giving rise to a sequential multistage polymerization process. The fluidized bed gas phase reactor can be preceded and/or followed by one or more liquid-phase and/or gas-phase polymerization reactors. Examples of liquid-phase reactors are loop reactors and continuously stirred tank reactors (CSTR). Examples of gas-phase reactors include fluidized bed reactors, stirred bed reactors and reactors having two interconnected polymerization zones as described in EP 0782587 and EP 1012195.

For instance, a fluidized bed reactor can be used to prepare a first polymer component, which is successively fed to a gas-phase reactor having two interconnected polymerization zones to prepare a second and a third polymer component. Or a first fluidized bed reactor can be used to prepare a first polymer component, which is successively fed to a second fluidized bed reactor to prepare a second polymer component and then to a third fluidized bed reactor to prepare a third polymer component. Accordingly, an olefin polymer endowed with a multi-modal molecular weight distribution can be obtained, as well as an olefin copolymer comprising two or more components having a different comonomer content.

Gas-phase polymerization reactors other than fluidized bed gas-phase reactors can be, for example, horizontally or vertically stirred reactor or multizone circulating reactors.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, in the upper part thereof according to an embodiment. The barrier fluid should have an appropriate composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, below the barrier feeding point according to an embodiment. Thus, it is also easily possible to create varying monomer, comonomer and hydrogen concentrations along the downcomer, resulting in a further differentiation of the polymerization conditions.

In a gas-phase polymerization process, the solid polymers are obtained from a gas-phase of the monomer or the monomers. Such gas-phase polymerizations may be carried out at pressures of from 0.1 to 20 MPa, or from 0.5 to 10 MPa, or from 1.0 to 5 MPa and polymerization temperatures from 40 to 150°C or from 65 to 125°C.

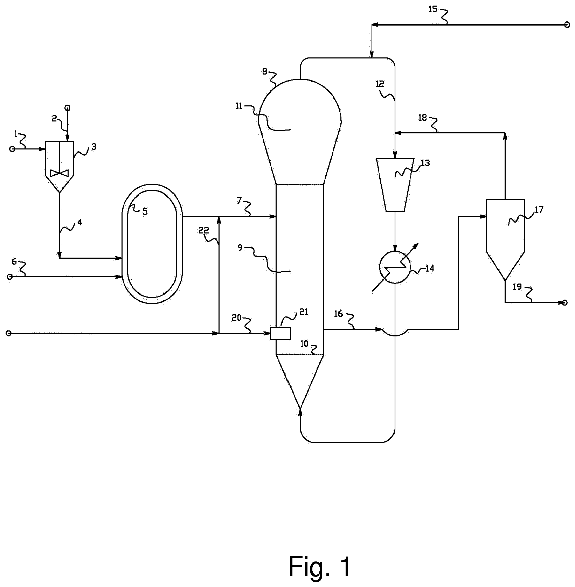

A fluidized bed gas phase polymerization reactor, representing an embodiment of the disclosure, will now be described in detail with reference to the enclosed Figure 1, which is a diagrammatic representation and has to be considered illustrative and not limitative of the scope of the invention.

In such embodiment, schematically, a solid catalyst component 1, a stream 2 containing the cocatalyst and an external donor compound, optionally in the presence of propylene, are fed to a precontacting vessel 3 together with a diluent, such as propane.

The obtained catalyst system is continuously fed via line 4 to a loop prepolymerization reactor 5, and simultaneously liquid propylene is fed to the reactor 5 via line 6, optionally together with an alkane, such as propane.

The prepolymerized catalyst system discharged from the loop reactor 5 is fed via line 7 to a fluidized bed reactor 8.

The fluidized bed reactor 8 of Fig. 1 comprises a fluidized bed 9 of growing polymer particles, a fluidization plate 10 and a velocity reduction zone 11. The velocity reduction zone 11 is generally of increased diameter compared to the diameter of the fluidized bed portion of the reactor. The gaseous stream leaving the top of the velocity reduction zone 11 is transferred via the recycle line 12 to a compressor 13 and then to a heat exchanger 14. The recycle line 12 is equipped with a line 15 for feeding propylene, hydrogen, inert gases and, optionally comonomers. Passing through the heat exchanger 14, the gaseous stream is cooled and then fed to the bottom of the fluidized bed reactor 8. In this way the upwardly flowing gas continuously maintains the bed of polymer particles in fluidization conditions.

The polymer obtained reactor 8 is discharged from the lower part of the fluidized bed 9 and is fed via line 16 to a solid/gas separator 17. Said gaseous mixture is fed back to the recycle line 12 through line 18, while the separated polymer is fed via line 19 to the next sections of the plant.

The antistatic composition can be added into the fluidized bed reactor 8 via line 20 through a distributor 21 protruding into the fluidized bed zone 9 of the reactor. Additionally, it can be added via an injection point 22 on line 7 exiting from the prepolymerization reactor 5 and entering the fluidized bed reactor 8.

According to an embodiment, the gas-phase polymerization processes according to the present disclosure are carried out in the presence of an alkane having from 3 to 5 carbon atoms as polymerization diluent, e.g. in the presence of propane.

The process of the present disclosure provides a possibility for preparing an olefin polymer by gas-phase polymerization in a polymerization reactor in which the formation of polymer agglomerates in the polymerization reactors and fluctuations in the fluid-dynamics of the reactor are prevented or considerably reduced. Because of the reduced electrostatics, the tendency of the olefin polymer particles to stick to the reactor walls is reduced. This does not only reduce the risk of forming chunks or wall sheeting, which mostly leads to an unavoidable shut-down of the polymerization reactor because of plugging the discharge line, but also improves the fluid-dynamics of the reactor and avoids their fluctuations.

Using an antistatic composition does not only result in a process for the polymerization of olefins which is simple to carry out, but the polymerization process has also a good operability. That means that the tendency for forming polymer deposits on the rector wall, i.e. reactor fouling, for forming lumps and for forming fines, i.e. for forming very small polyolefin particles, is reduced. Moreover, the activity of the catalyst is improved or at least not impaired and the product properties of the prepared polyolefins are not deteriorated.

EXAMPLES

The following examples are given to illustrate the present invention without any limiting purpose.

**Test Methods**

Melt flow rate (MFR "L")

Determined according to ISO 1133 (230°C, 2.16 Kg)

Ethylene content in copolymers

The content of ethylene comonomer was determined by infrared spectroscopy by collecting the IR spectrum of the sample vs. an air background with a Fourier Transform Infrared spectrometer (FTIR). The instrument data acquisition parameters were:

- purge time: 30 seconds minimum

- collect time: 3 minutes minimum

- apodization: Happ-Genzel

- resolution: $2$ cm$^{-1}$.

Sample Preparation - Using a hydraulic press, a thick sheet was obtained by pressing about g 1 of sample between two aluminum foils. A small portion was cut from this sheet to mold a film. Recommended film thickness ranges between 0.02 and 0.05 cm (8 - 20 mils). Pressing temperature was 180 ± 10°C (356°F) and about 10 kg/cm2 (142.2 PSI) pressure for about one minute. The pressure was released, the sample removed from the press and cooled to room temperature.

The spectrum of pressed film sample was recorded in absorbance vs. wavenumbers (cm-1). The following measurements were used to calculate ethylene content:

- Area (At) of the combination absorption bands between 4482 and 3950 cm$^{-1}$, used for spectrometric normalization of film thickness;

- Area (AC2) of the absorption band between 750-700 cm$^{-1}$ after two proper consecutive spectroscopic subtractions of an isotactic non-additivated polypropylene spectrum and then of a reference spectrum of an ethylene-propylene random copolymer in the range 800-690 cm$^{-1}$;

- Height (DC4) of the absorption band at 769 cm$^{-1}$ (maximum value), after two proper consecutive spectroscopic subtractions of an isotactic non-additivated polypropylene spectrum and then of a reference spectrum of an ethylene-propylene random copolymer in the range 800-690 cm$^{-1}$.

In order to calculate the ethylene content, a calibration straight line for ethylene obtained by using samples of known amount of ethylene is needed and was obtained by plotting AC2/At versus ethylene molar percent (%C2m). The slope GC2 was calculated from a linear regression.

The spectra of the unknown samples were recorded and then (At), (AC2) and (DC4) of the unknown sample calculated. The ethylene content by weight was obtained from the ethylene content (% molar fraction C2m) of the sample calculated as follows:

$$\%C2m = \frac{1}{Gc_2} \cdot \frac{Ac_2}{At}$$

Xylene Solubles (XS)

Determined as follows: 2.5 g of polymer and 250 ml of xylene were introduced in a glass flask equipped with a refrigerator and a magnetic stirrer. The temperature was raised in 30 minutes up to the boiling point of the solvent. The clear solution so obtained was then kept under reflux and stirring for further 30 minutes. The closed flask was then kept in thermostatic water bath at 25° C for 30 minutes. The so formed solid was filtered on quick filtering paper. 100 ml of the filtered liquid was poured in a previously weighed aluminum container, which was heated on a heating plate under nitrogen flow, to remove the solvent by evaporation. The container was then kept in an oven at 80° C under vacuum until constant weight was obtained. The weight percentage of polymer soluble in xylene at room temperature was then calculated.

**Example 1**

Preparation of the Zieqler-Natta solid catalyst component

An initial amount of microspheroidal $MgCl_2 \cdot 2.8C_2H_5OH$ adduct was prepared according to the method described in Example 2 of WO98/44009, but operating on larger scale. The so-obtained adduct was then partially dealcoholated in a nitrogen flow until the alcohol content reached the value of 50%wt based on the total weight of the adduct.

300 ml of TiCl4 were introduced at room temperature under nitrogen atmosphere into a 500 ml round bottom flask, equipped with mechanical stirrer, cooler and thermometer. After cooling to 0°C, while stirring, diisobutylphthalate (internal donor) and 9.0 g of the adduct prepared as described above were sequentially added into the flask. The amount of internal donor added was such as to meet a Mg/donor molar ratio of 8. The temperature was raised to 100°C and maintained for 2 hours. Thereafter, stirring was stopped, the solid product was allowed to settle and the supernatant liquid was si-phoned off at 100°C. After the supernatant was removed, additional fresh TiCl4 was added to reach the initial liquid volume again. The mixture was then heated at 120°C and kept at this temperature for 1 hour. Stirring was stopped again, the solid was allowed to settle and the supernatant liquid was si-phoned off. The solid was washed with anhydrous hexane six times in temperature gradient down to 60°C and one time at room temperature. The obtained solid was then dried under vacuum and analyzed.

Catalyst Activation and Prepolymerization

Before introducing it into the polymerization reactors, the solid catalyst component prepared as described above was contacted with aluminum-triethyl (TEAL) and with dicyclopentyl-dimethoxysilane (donor D) under the conditions reported in Table 1.

The activated catalyst discharged from the activation vessel was continuously fed, together with liquid propylene, to a prepolymerization loop reactor operated at a temperature of 20°C and a residence time of 7 minutes.

Polymerization

The polymerization run was conducted in continuous mode in a fluidized bed gas-phase reactor as illustrated in Figure 1, having a diameter of 40 cm in the fluidized bed zone. The prepolymerized catalyst was discharged from the prepolymerization reactor and was continuously fed to a fluidized bed gas-phase reactor where an ethylene-propylene copolymer was prepared. Liquid propylene, ethylene and hydrogen as molecular weight regulator were fed to reactor 8 via line 15 into the recycle line 12.

An antistatic composition comprising 7 %w of water and 93 %w of Polyglykol PE-K 270 commercialized by Clariant was fed into the polymer bed partly through an injection point 22 on line 7 exiting from the prepolymerization reactor 5 and entering the fluidized bed reactor 8 and partly via a distributor 21 protruding into fluidized bed zone 9 and terminating with a discharge end positioned 10 cm from the wall of the reactor. The flow rate of the antistatic composition feed was such as to obtain in the polymer the amounts of antistatic indicated in Table 1 and was split 50/50 between the two injection points. The gas phase (propylene, ethylene and hydrogen) was continuously analyzed via gas-chromatography. At the end of the run the powder was discharged and dried under a nitrogen flow.

The main polymerization conditions and polymer features are reported in Table 1 together with the effect of the antistatic composition.

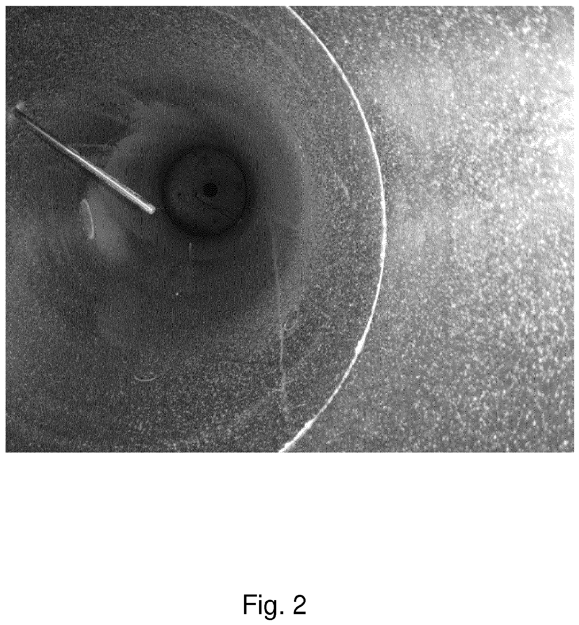

The antistatic composition proved to be effective. Also, visual inspection of the reactor surface (Figure 2) showed that its wall were clean, namely there was no formation of sheeting or adhesion of polymer particles. The addition of the antistatic composition ensured a very stable operation of the plant for the duration of the trial, as evidenced by the absence of problems at the reactor discharge. Also, the presence of the antistatic agent did not negatively affect the catalyst activity.

**Example 2C (comparative)**

Preparation of the Ziegler-Natta solid catalyst component

Prepared in accordance with example 1 of EP 728770 with the difference that the diameter of the spherical adduct particles was 60 micron.

Catalyst Activation, Prepolymerization and Polymerization

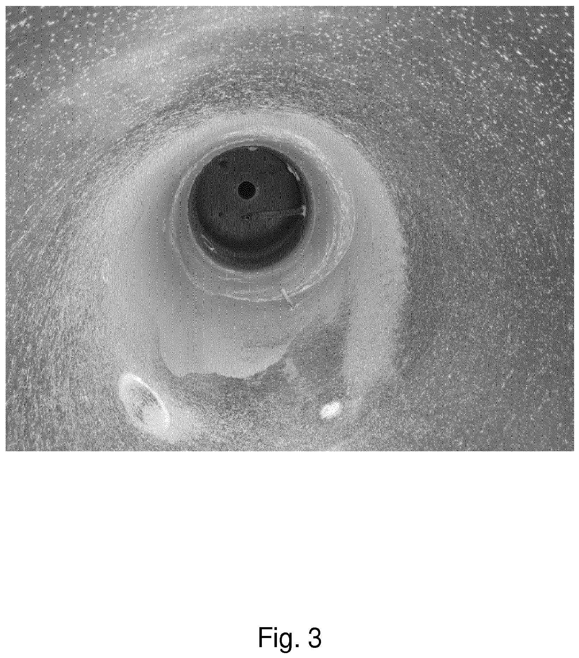

Example 1 was repeated with slight condition differences indicated in Table 1 and with the additional difference that the antistatic composition was fed into the polymer bed only via the injection point 22 on line 7 exiting from the prepolymerization reactor 5. In this case, the antistatic effect was lower, as reported in Table 1 below. Visual inspection of the reactor surface (Figure 3) showed that it was found severely fouled.

**Table 1**

| Example | 1 | 2C |
|---|---|---|
| **Precontact** | | |
| Temperature (°C) | 20 | 20 |
| Residence time (min) | 10 | 10 |
| TEAL/catalyst (g/g) | 4 | 4 |
| TEAL/donor ratio (g/g) | 4 | 10 |
| **Prepolymerization** | | |
| Temperature (°C) | 20 | 20 |
| Residence time (min) | 35 | 35 |
| **Gas-Phase reactor** | | |
| Temperature (°C) | 70 | 70 |
| Pressure (barg) | 17 | 18 |
| Residence time (min) | 50 | 58 |
| $C_2^-/C_2^-+C_3^-$ (mol/mol) | 0.027 | 0.026 |
| $H_2/C_3^-$ (mol/mol) | 0.006 | 0.004 |
| Mileage (kg/g) | 4600 | 2500 |
| Antistatic composition (ppm wt) | 135 | 140 |
| **Polymer analysis** | | |
| MFR "L" (dg/min) | 1.8 | 6.8 |
| Ethylene content (wt%) | 3.4 | 3.2 |
| Xylene solubles (wt%) | 4.2 | 5.5 |
| **Effect of antistatic composition** | | |
| Reactor surface | Clean | fouled |

(continued)

| **Effect of antistatic composition** | | |
|---|---|---|
| Operability | Stable | unstable |
| Notes: $C_2$ = ethylene; $C_3^-$ = propylene; $H_2$ = hydrogen; Split = amount of polymer prepared in the concerned reactor referred to the total weight; Mileage = amount of obtained polymer per amount of catalyst fed to the polymerization. | | |

**Claims**

**1.** A method for feeding a fluid antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm$^2$/sec (DIN 51562)

into a polymer bed of a fluidized bed gas phase polymerization reactor, the method comprising introducing a controlled and continuous flow rate of the fluid antistatic composition into the polymer bed through a distributor protruding into the fluidized bed zone of the reactor and terminating with a discharge end positioned so that the following equation is fulfilled:

$$d/D > 0.020$$

wherein:

- d is the distance of the distributor's discharge end from the wall of the reactor, and D is the diameter of the reactor in the fluidized bed zone; and
- a head loss is generated through appropriate orifices in the distributor such that a Reynolds number (Re) of from 10000 to 700000 is achieved.

2. The method according to claim 1, comprising feeding the antistatic composition or individual components thereof to the polymerization reactor in a flow of saturated or unsaturated hydrocarbon having from 2 to 6 carbon atoms.

3. The method according to claim 1 or 2, wherein the compound (a) of formula R-OH is water.

4. The method according to any of claims 1 to 3, wherein the oligomeric or polymeric organic compound (b) is an alkylene-oxide-derived polymer comprising on average from 10 to 200 repeating units --(CH2-CHR-O)-, with R being hydrogen or an alkyl group having from 1 to 6 carbon atoms.

5. The method according to any of claims 1 to 4, wherein the amount of component (a) in the antistatic composition introduced into the polymerization reactor is from 0.5 to 50 % by weight with respect to the total weight of antistatic composition, and the amount of component (b) in the antistatic composition introduced into the polymerization reactor is from 50 to 99.5 % by weight with respect to the total weight of antistatic composition.

6. The method according to any of the preceding claims, comprising homogenizing inside the distributor the antistatic composition or components and the hydrocarbon.

7. A process for the preparation of polyolefins in the presence of an antistatic compound comprising the step of feeding a fluid antistatic composition comprising (with respect to the total weight of the antistatic composition):

(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm$^2$/sec (DIN 51562)

into a polymer bed of a fluidized bed gas phase polymerization reactor by introducing a controlled and continuous flow rate of the fluid antistatic composition into the polymer bed through a distributor protruding into the fluidized bed zone of the reactor and terminating with a discharge end positioned so that the following equation is fulfilled:

$$d/D > 0.020$$

wherein:

- d is the distance of the distributor's discharge end from the wall of the reactor, and D is the diameter of the reactor in the fluidized bed zone; and

- a head loss is generated through appropriate orifices in the distributor such that a Reynolds number (Re) of from 10000 to 700000 is achieved.

8. The process according to claim 7, wherein a Ziegler-Natta catalyst is used comprising:

(i) a solid catalyst component comprising Mg, Ti, an halogen and a first electron donor compound named internal donor,
(ii) an alkylaluminum compound, and
(iii) optionally, a second electron-donor compound named external donor.

**Patentansprüche**

1. Verfahren zum Zuführen einer flüssigen antistatischen Zusammensetzung, umfassend (in Bezug auf das Gesamtgewicht der Gewicht der antistatischen Zusammensetzung):

(a) 0,5 bis 50 Gew.% einer Verbindung mit der Formel R-OH, wobei R für Wasserstoff oder eine lineare oder verzweigte gesättigte Alkylgruppe mit 1 bis 15 Kohlenstoffatomen steht; und
(b) 50 bis 99,5 Gew.% einer oligomeren oder polymeren organischen Verbindung mit einer oder mehreren endständigen Hydroxylgruppen und einer Viskosität bei 40 °C von mindestens 20 mm$^2$/s (DIN 51562)

in ein Polymerbett eines Wirbelschicht-Gasphasen-Polymerisationsreaktors, wobei das Verfahren das Einbringen einer kontrollierten und kontinuierlichen Strömungsrate der flüssigen antistatischen Zusammensetzung in das Polymerbett durch einen Verteiler, der in die Wirbelschichtzone des Reaktors hervorragt und mit einem Auslassende endet, das so positioniert ist, dass die folgende Gleichung erfüllt ist:

$$d/D > 0,020$$

wobei:

- d der Abstand des Austragsendes des Verteilers zu der Wand des Reaktors ist, und D der Durchmesser des Reaktors in der Wirbelbettzone ist; und
- durch geeignete Durchbrüche in dem Verteiler ein Druckverlust generiert wird, so dass eine Reynolds-Zahl (Re) von 10000 bis 700000 erreicht wird.

2. Verfahren nach Anspruch 1, umfassend Zuführen der Antistatikzusammensetzung oder individuellen Komponenten davon in den Polymerisationsreaktor in einem Fluss von gesättigtem oder ungesättigtem Kohlenwasserstoff mit 2 bis 6 Kohlenstoffatomen.

3. Verfahren nach Anspruch 1 oder 2, wobei die Verbindung (a) mit der Formel R-OH Wasser ist.

4. Verfahren nach einem der Ansprüche 1 bis 3, wobei die oligomere oder polymere organische Verbindung (b) ein von Alkylenoxid abgeleitetes Polymer ist, das durchschnittlich 10 bis 200 sich wiederholende Einheiten -(CH2-CHR-0)- umfasst, wobei R Wasserstoff oder eine Alkylgruppe mit 1 bis 6 Kohlenstoffatomen ist.

5. Verfahren nach einem der Ansprüche 1 bis 4, wobei die Menge an Komponente (a) in der Antistatikzusammensetzung, die in den Polymerisationsreaktor eingebracht wird, 0,5 bis 50 Gew.% in Bezug auf das Gesamtgewicht der Antistatikzusammensetzung beträgt, und wobei die Menge an Komponente (b) in der Antistatikzusammensetzung, die in den Polymerisationsreaktor eingebracht wird, 50 bis 99,5 Gew.% in Bezug auf das Gesamtgewicht der Antistatikzusammensetzung beträgt.

6. Verfahren nach einem der vorhergehenden Ansprüche, umfassend Homogenisieren der Antistatikzusammensetzung oder Komponenten und des Kohlenwasserstoffs im Inneren des Verteilers.

7. Verfahren zur Herstellung von Polyolefinen in Gegenwart einer Antistatikverbindung, umfassend den Schritt des Zuführens einer flüssigen antistatischen Zusammensetzung, umfassend (in Bezug auf das Gesamtgewicht der antistatischen Zusammensetzung):

(a) 0,5 bis 50 Gew.% einer Verbindung mit der Formel R-OH, wobei R für Wasserstoff oder eine lineare oder verzweigte gesättigte Alkylgruppe mit 1 bis 15 Kohlenstoffatomen steht; und
(b) 50 bis 99,5 Gew.% einer oligomeren oder polymeren organischen Verbindung mit einer oder mehreren endständigen Hydroxylgruppen und einer Viskosität bei 40 °C von mindestens 20 mm$^2$/s (DIN 51562)

in ein Polymerbett eines Wirbelbett-Gasphasenpolymerisationsreaktors durch Einbringen einer gesteuerten und kontinuierlichen Strömungsrate der flüssigen antistatischen Zusammensetzung in das Polymerbett durch einen Verteiler, der in die Wirbelbettzone des Reaktor hervorragt und mit einem Austragsende endet, das so positioniert ist, dass die folgende Gleichung erfüllt ist:

$$d/D > 0,020$$

wobei:

- d der Abstand des Austragsendes des Verteilers zu der Wand des Reaktors ist, und D der Durchmesser des Reaktors in der Wirbelbettzone ist; und
- durch geeignete Durchbrüche in dem Verteiler ein Druckverlust generiert wird, so dass eine Reynolds-Zahl (Re) von 10000 bis 700000 erreicht wird.

8. Verfahren nach Anspruch 7, wobei ein Ziegler-Natta-Katalysator verwendet wird, welcher umfasst:

(i) eine feste Katalysatorkomponente, die Mg, Ti, ein Halogen und eine erste Elektronendonorverbindung umfasst, die als interner Donor bezeichnet wird,
(ii) eine Alkylaluminiumverbindung und
(iii) gegebenenfalls eine zweite Elektronendonorverbindung, die als externer Donor bezeichnet wird.

**Revendications**

1. Procédé d'alimentation d'une composition antistatique fluide comprenant (par rapport au poids total de la composition antistatique) :

(a) 0,5 à 50 % en poids d'un composé de formule R-OH, R représentant hydrogène ou un groupe alkyle saturé linéaire ou ramifié comprenant 1 à 15 atomes de carbone ; et
(b) 50 à 99,5 % en poids d'un composé organique oligomère ou polymère présentant un ou plusieurs groupes hydroxyle terminaux et une viscosité à 40°C d'au moins 20 mm$^2$/sec (DIN 51562)

dans un lit de polymère d'un réacteur de polymérisation en phase gazeuse à lit fluidisé le procédé comprenant l'introduction d'un débit régulé et continu de la composition fluide antistatique dans le lit de polymère à travers un distributeur faisant saillie dans la zone de lit fluidisé du réacteur et se terminant par une extrémité d'évacuation positionnée de telle sorte que l'équation suivante est satisfaite :

$$d/D > 0,020$$

- d étant la distance de l'extrémité d'évacuation du distributeur par rapport à la paroi du réacteur et D étant le diamètre du réacteur dans la zone de lit fluidisé ; et
- une perte de charge étant générée à travers des orifices appropriés dans le distributeur de telle sorte qu'un nombre de Reynolds (Re) de 10000 à 700000 est obtenu.

2. Procédé selon la revendication 1, comprenant l'alimentation de la composition antistatique ou de ses constituants individuels dans le réacteur de polymérisation dans un flux d'hydrocarbure saturé ou insaturé comprenant 2 à 6 atomes de carbone.

3. Procédé selon les revendications 1 ou 2, le composé (a) de formule R-OH étant de l'eau.

4. Procédé selon l'une quelconque des revendications 1 à 3, le composé organique oligomère ou polymère (b) étant un polymère dérivé d'oxyde d'alkylène comprenant en moyenne 10 à 200 motifs récurrents -(CH2-CHR-O)-, R représentant hydrogène ou un groupe alkyle comprenant 1 à 6 atomes de carbone.

5. Procédé selon l'une quelconque des revendications 1 à 4, la quantité de constituant (a) dans la composition antistatique introduite dans le réacteur de polymérisation étant de 0,5 à 50% en poids par rapport au poids total de la composition antistatique et la quantité de constituant (b) dans la composition antistatique introduite dans le réacteur de polymérisation étant de 50 à 99,5% en poids par rapport au poids total de la composition antistatique.

6. Procédé selon l'une quelconque des revendications précédentes, comprenant l'homogénéisation à l'intérieur du distributeur de la composition antistatique ou des constituants et de l'hydrocarbure.

7. Procédé pour la préparation de polyoléfines en présence d'un composé antistatique comprenant l'étape d'alimentation d'une composition antistatique fluide comprenant (par rapport au poids total de la composition antistatique) :

   (a) 0,5 à 50 % en poids d'un composé de formule R-OH, R représentant hydrogène ou un groupe alkyle saturé linéaire ou ramifié comprenant 1 à 15 atomes de carbone ; et
   (b) 50 à 99,5 % en poids d'un composé organique oligomère ou polymère présentant un ou plusieurs groupes hydroxyle terminaux et une viscosité à 40°C d'au moins 20 mm$^2$/sec (DIN 51562)

   dans un lit de polymère d'un réacteur de polymérisation en phase gazeuse à lit fluidisé par introduction d'un débit régulé et continu de la composition fluide antistatique dans le lit de polymère à travers un distributeur faisant saillie dans la zone de lit fluidisé du réacteur et se terminant par une extrémité d'évacuation positionnée de telle sorte que l'équation suivante est satisfaite :

$$d/D > 0,020$$

   - d étant la distance de l'extrémité d'évacuation du distributeur par rapport à la paroi du réacteur et D étant le diamètre du réacteur dans la zone de lit fluidisé ; et
   - une perte de charge étant générée à travers des orifices appropriés dans le distributeur de telle sorte qu'un nombre de Reynolds (Re) de 10000 à 700000 est obtenu.

8. Procédé selon la revendication 7, un catalyseur Ziegler-Natta étant utilisé, comprenant :

   (i) un constituant catalytique solide comprenant Mg, Ti, un halogène et un premier composé donneur d'électrons appelé donneur interne,
   (ii) un composé d'alkylaluminium et
   (iii) éventuellement, un deuxième composé donneur d'électrons appelé donneur externe.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1083192 A1
- EP 856530 A2
- US 6111034 A
- EP 0782587 A
- EP 1012195 A
- WO 9704015 A1
- WO 0002929 A1
- WO 9844009 A
- EP 728770 A